# FASCICULE DE BREVET EUROPEEN

(11) **EP 3 457 896 B1**
(45) Date de publication et mention de la délivrance du brevet: **17.11.2021**
(21) Numéro de dépôt: 17723725.2
(22) Date de dépôt: 19.05.2017
(51) Int. Cl.: A47J 27/08

(54) **SYSTÈME D'OUVERTURE ET DE FERMETURE POUR AUTOCUISEUR**
ÖFFNUNGS- UND VERSCHLUSSSYSTEM EINES SCHNELLKOCHTOPFS
OPENING AND CLOSING SYSTEM FOR PRESSURE COOKER

(30) Priorité: 19.05.2016 EP 16170453
(43) Date de publication de la demande: 27.03.2019
(73) Titulaire: Lagostina S.p.A., 28887 Omegna (VB) (IT)
(72) Inventeur: MILANESI, Fausto, 28831 Baveno (VB) (IT)
(74) Mandataire: Weber, Jean-François
(86) Numéro de dépôt international: PCT/EP2017/062164
(87) Numéro de publication internationale: WO 2017/198848

(56) Documents cités:
- EP-A1- 1 938 717
- EP-A1- 2 732 735
- FR-A- 757 093

## Description

### DOMAINE TECHNIQUE

La présente invention concerne des autocuiseurs, c'est-à-dire les appareils de cuisson sous pression comprenant une cuve et un couvercle, notamment un couvercle rentrant, configuré pour fermer la cuve en coopérant avec un bord supérieur circulaire de la cuve.

La présente invention concerne, plus particulièrement, un système d'ouverture et de fermeture pour autocuiseur et, en outre, un autocuiseur comprenant le système d'ouverture et de fermeture.

Plus précisément, l'objet de la présente invention est un système d'ouverture et de fermeture du type dit « *à levier* ». Les systèmes de ce type comprennent :
- un couvercle mobile entre au moins une position de fermeture dans laquelle ledit couvercle est apte à coopérer avec une cuve pour former un autocuiseur étanche et une position d'ouverture dans laquelle le couvercle permet que l'intérieur de la cuve communique avec l'extérieur ;
- une soupape de régulation de la pression;
- un élément transversal positionné au dessus du couvercle ;
- des moyens de commande du système d'ouverture et de fermeture ;
- des moyens de sécurité comprenant notamment une soupape de sécurité à la surpression et un moyen de sécurité à l'ouverture.

### TECHNIQUE ANTERIEURE

Les moyens de commande comprennent habituellement :
- un verrou ;
- un ressort relié au verrou ;
- un levier formant une poignée de commande du déplacement du couvercle (2) entre ses positions de fermeture et d'ouverture, mobile en rotation entre une première position correspondant à la position de fermeture du couvercle (2) et au moins une seconde position correspondant à la position d'ouverture dudit couvercle (2), une extrémité du levier étant pourvue d'une came.

La came est conformée de manière à coopérer avec le verrou ; plus particulièrement, la came comporte une face de blocage qui coopère avec un crochet du verrou pour immobiliser le levier dans sa première position.

Les systèmes d'ouverture et de fermeture de l'état de la technique décrits ci-dessus peuvent passer de la position de fermeture à la position d'ouverture en effectuant les opérations suivantes :
- le levier doit être tourné de manière à se rapprocher de l'élément transversal en exerçant une force verticale dirigée vers le bas pour supprimer l'effort de la face de blocage sur le crochet du verrou ;
- le verrou doit être déplacé horizontalement par l'utilisateur, en comprimant le ressort. La came est libérée ainsi que le levier ;
- le levier doit être tourné en l'éloignant de l'élément transversal vers la seconde position (c'est-à-dire dans le sens opposé par rapport au sens dans lequel le levier a été préalablement tourné). Ainsi, le couvercle est en position d'ouverture.

En résumé, pour changer le système de la position de fermeture à la position d'ouverture, deux rotations du levier doivent être effectuées, en plus du déplacement du verrou.

Avec un tel type de système, l'utilisateur, en particulier l'utilisateur plus faible et peu expérimenté, peut éprouver une certaine difficulté à ouvrir l'autocuiseur.

Le document EP-1 938 717 A1 décrit un autocuiseur à couvercle rentrant muni d'un levier et d'un verrou.

### EXPOSE DE L'INVENTION

L'objet de la présente invention est par conséquent de proposer un système d'ouverture et de fermeture pour autocuiseur qui rend ce dernier plus facile à utiliser, grâce à un actionnement plus doux et plus fluide du levier de commande, de manière à ce que l'ouverture et la fermeture de l'autocuiseur soient simples et sans effort, même pour l'utilisateur plus faible et peu expérimenté.

L'objet de la présente invention est également de proposer un système d'ouverture et de fermeture pour autocuiseur avec un nombre réduit de composants, ce qui réduit la complexité structurelle de l'ensemble de l'autocuiseur et facilite l'entretien de celui-ci.

La présente invention vise également à proposer un système d'ouverture et de fermeture pour autocuiseur, dont les éléments sont caractérisés par une conception plus simple que ceux de l'état antérieur de la technique, de manière à rendre la production du système proposé moins complexe et moins coûteuse.

Enfin, la présente invention propose un système d'ouverture et de fermeture présentant un fonctionnement plus sûr.

Tous ces objectifs sont atteints par un système d'ouverture et de fermeture pour autocuiseur à couvercle rentrant comprenant :
- un couvercle, mobile entre au moins une position de fermeture dans laquelle ledit couvercle est apte à coopérer avec une cuve pour former un autocuiseur étanche et une position d'ouverture dans laquelle le couvercle permet que l'intérieur de la cuve communique avec l'extérieur,
- un levier de commande du déplacement du couvercle entre ses positions de fermeture et d'ouverture, mobile en rotation entre une première position correspondant à la position de fermeture du couvercle et au moins une seconde position correspondant à la position d'ouverture dudit couvercle ; le levier étant muni d'une came,
- un verrou mobile entre une position engagée dans laquelle le verrou tend à maintenir le levier dans la première position et une position désengagée dans laquelle le levier peut tourner librement,
- un organe de rappel ramenant le verrou dans la position engagée contre la came, le verrou générant ainsi une force de maintien sur la came pour maintenir le levier dans la première position,
caractérisé en ce que la came et le verrou sont configurés de telle sorte que lorsqu'un couple supérieur à une valeur prédéterminée est appliqué sur le levier pour le faire passer de la première position à la seconde position, la came applique sur le verrou une force supérieure à la force de maintien et le levier tourne de la première position à la seconde position, la came repoussant le verrou contre l'action de l'organe de rappel, qui se déplace alors de la position engagée à la position désengagée.

Le système d'ouverture et de fermeture de la présente invention peut passer de la position de fermeture à la position d'ouverture en effectuant une opération unique, décrite ci-après :
- le levier doit être tourné de la première position à la seconde position. Ce faisant, le verrou est poussé par la came elle-même. Le verrou est alors désengagé et le levier est libre de tourner davantage, provoquant ainsi l'ouverture du couvercle et donc de l'autocuiseur.

Par conséquent, le système est capable de passer de la position de fermeture à la position d'ouverture du couvercle au moyen d'un mouvement unique et continu du levier.

Pour passer de la position d'ouverture à la position de fermeture du couvercle, le levier tourne depuis la seconde position vers la première position, la came pousse le verrou, le verrou se déplace alors de la position désengagée à la position engagée.

De façon avantageuse, l'organe de rappel comprend un ressort.

De préférence, le verrou est pourvu d'un logement et la came est pourvue d'une dent configurée pour s'engager dans ledit logement lorsque le levier est dans la première position et le verrou est dans la position engagée.

Ainsi, lorsque le verrou est en position engagée, le logement du verrou, sous l'action de l'organe de rappel, applique un effort de maintien sur la dent de la came et tend à retenir par conséquent le levier dans la première position. Un couple supérieur à une valeur prédéterminée doit être appliqué sur le levier pour faire tourner celui-ci de la première position à la seconde position et provoquer le déplacement de la dent hors du logement.

Par dent, on comprend une protubérance présentant une forme arrondie, complémentaire de la forme du logement.

On comprend que la came pourvue d'un logement et le verrou pourvu d'une dent configurée pour s'engager dans ledit logement est un équivalent.

De façon avantageuse, le logement comprend une paroi concave.

Ainsi, la paroi concave peut coopérer avec une dent ayant une forme ronde lorsque le verrou est dans la position engagée. Dans une version simplifiée, la paroi concave peut se limiter à une paroi inclinée.

De préférence, la came est munie d'une partie adjacente à la dent et le verrou est muni d'une paroi inclinée configurée de telle sorte que, lorsque le levier pivote de la première position à la seconde position, cette partie pousse la paroi inclinée.

De façon avantageuse, le système comporte un moyen de sécurité à l'ouverture mobile entre une position activée tant que la pression régnant dans l'autocuiseur est supérieure à une valeur prédéterminée et une position désactivée tant que la pression régnant dans l'enceinte est inférieure à une valeur prédéterminée

De préférence, le verrou comprend un logement pour recevoir le moyen de sécurité à l'ouverture dans la position activée, le moyen de sécurité à l'ouverture en position activée bloquant le verrou dans la position engagée.

Ainsi, le levier ne peut plus tourner de la première position vers la seconde position lorsque le moyen de sécurité à l'ouverture se trouve dans une position activée correspondant à une pression régnant dans l'enceinte supérieure à une valeur prédéterminée.

De façon avantageuse, le système comporte un élément transversal comprenant un logement de réception du moyen de sécurité à l'ouverture.

De préférence, le système comporte une soupape de sécurité à la surpression agencée sur l'élément transversal.

De façon avantageuse, le système comprend une soupape de régulation de la pression agencée sur l'élément transversal.

De préférence, l'élément transversal comprend une partie de prolongement, la partie de prolongement comprenant un logement pour ladite soupape de régulation de la pression.

De façon avantageuse, la partie de prolongement est positionnée perpendiculairement à l'élément transversal.

De préférence, la soupape de régulation de la pression est une soupape à poids ou une soupape à ressort.

La présente invention concerne également un autocuiseur comprenant un système d'ouverture et de fermeture tel que décrit précédemment.

Ces caractéristiques et d'autres apparaîtront plus clairement à l'aide de la description détaillée qui suit de deux modes de réalisation privilégiés de l'invention, à lire à titre d'exemples non limitatifs du principe plus général revendiqué.

### DESCRIPTIF SOMMAIRE DES DESSINS

La description se réfère aux dessins annexés, dans lesquels :
- La figure 1 montre une vue latérale en coupe du système d'ouverture et de fermeture selon la présente invention, dans la position de fermeture ;
- La figure 2 représente une vue latérale en coupe du système d'ouverture et de fermeture selon la présente invention, lors de l'opération de basculement de la position de fermeture à la position d'ouverture ;
- La figure 3 montre une vue latérale en coupe du système d'ouverture et de fermeture selon la présente invention, dans la position d'ouverture ;
- La figure 4 est une vue en perspective d'un premier mode de réalisation du système d'ouverture et de fermeture selon la présente invention ;
- La figure 5 est une vue en perspective d'un deuxième mode de réalisation du système d'ouverture et de fermeture selon la présente invention.

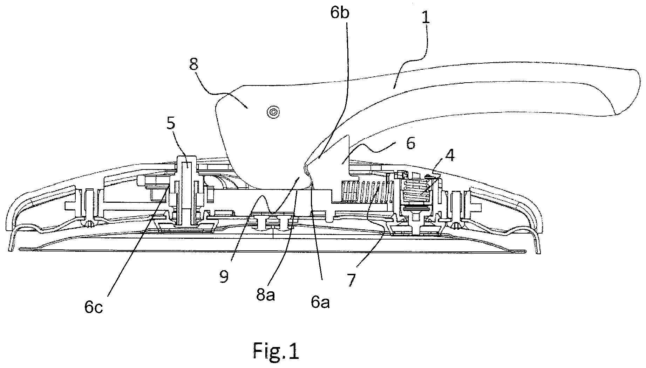

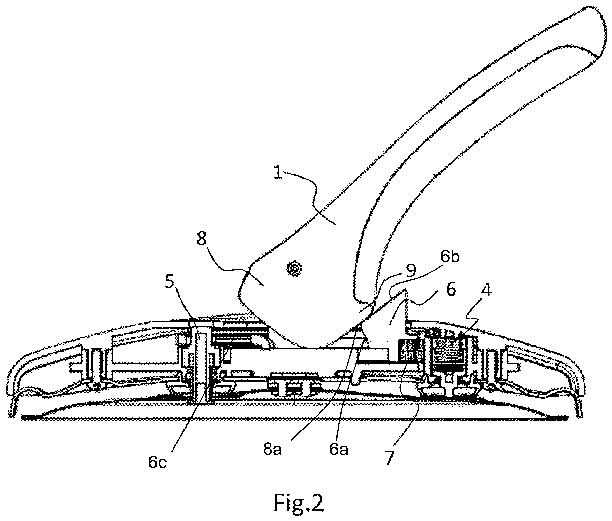

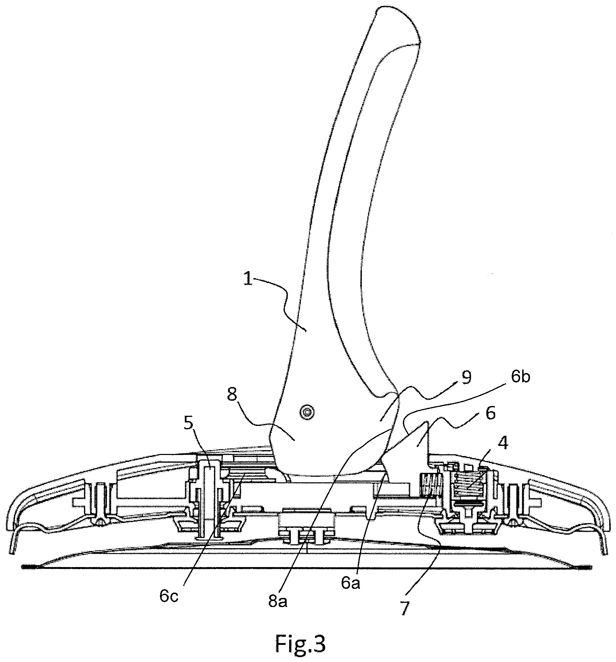

En se référant aux figures 1, 2 et 3, le système d'ouverture et de fermeture selon la présente invention comprend :
- un couvercle 2, mobile entre au moins une position de fermeture dans laquelle ledit couvercle 2 est apte à coopérer avec une cuve pour former un autocuiseur étanche et une position d'ouverture dans laquelle le couvercle 2 permet que l'intérieur de la cuve communique avec l'extérieur ;
- un levier 1, monté de manière à se déplacer entre une première position correspondant à la position de fermeture du couvercle 2 et une seconde position correspondant à la position d'ouverture du couvercle 2 ;
- un élément transversal 3 ;
- des moyens de sécurité 4, 5 comprenant une soupape de sécurité à la surpression 4 et un moyen de sécurité à l'ouverture 5 ;
- une soupape de régulation de la pression 19 ;
- un verrou 6 ;
- un ressort 7 relié au verrou 6.

### MEILLEURE MANIERE DE REALISER L'INVENTION

Le système d'ouverture et de fermeture selon la présente invention fait avantageusement partie d'un appareil de cuisson sous pression (ou autocuiseur) conçu pour assurer la cuisson d'aliments, sous pression de vapeur. L'autocuiseur en question comprend avantageusement au moins une cuve qui forme un récipient de cuisson destiné à accueillir les aliments. La cuve est avantageusement fabriquée à partir d'un matériau métallique (par exemple acier inoxydable ou aluminium), et comprend un fond ainsi qu'une paroi latérale qui s'élève à partir et à la périphérie du fond. Un rebord rentrant s'étend de façon centripète à partir de la paroi latérale, préférentiellement à partir du sommet de cette dernière. De préférence, la paroi latérale s'étend entre une extrémité inférieure reliée à la périphérie du fond et une extrémité supérieure prolongée par le rebord rentrant, lequel converge radialement vers le centre de la cuve. Le rebord rentrant présente avantageusement une face interne située en regard de l'intérieur de la cuve, c'est à dire orientée vers le fond. De préférence, le rebord rentrant comprend un tronçon sensiblement tronconique qui s'étend, par exemple selon une direction oblique vers le haut, dans le prolongement de la paroi latérale, vers l'intérieur de la cuve, en surplomb de l'intérieur de la cuve et de son fond. Le tronçon tronconique se termine lui-même avantageusement par un bord roulé qui ménage un logement destiné à accueillir un joint d'étanchéité annulaire, lequel vient habiller la face interne du rebord rentrant. Le rebord rentrant centripète, qui fait donc saillie vers l'intérieur de la cuve, délimite ainsi une ouverture d'accès à l'intérieur de la cuve, par laquelle peuvent être introduits les aliments à cuire. Le diamètre de cette ouverture définie par le rebord rentrant est sensiblement inférieur au diamètre de la paroi latérale.

Le couvercle 2 est avantageusement conçu pour être rapporté dans la cuve pour former avec cette dernière une enceinte de cuisson. Plus précisément, l'appareil de cuisson est avantageusement un appareil de cuisson sous pression à couvercle rentrant. Cela signifie que pour former, à l'aide de la cuve et du couvercle 2, une enceinte étanche de cuisson, il est nécessaire d'introduire tout d'abord entièrement le couvercle 2 à l'intérieur de la cuve, sous le bord libre supérieur (formé par le rebord rentrant) de cette dernière, ledit bord libre délimitant l'ouverture d'accès à l'intérieur de la cuve, puis d'imprimer audit couvercle 2 un mouvement vertical de bas en haut pour que le couvercle 2 vienne en appui étanche contre et sous ledit bord libre supérieur (i.e. contre la face inférieure du bord rentrant), pour obtenir une enceinte de cuisson hermétiquement close. Ce principe général sous-tendant la construction et le fonctionnement des appareils de cuisson sous pression à couvercle rentrant est bien connu en tant que tel.

Le couvercle 2 est ainsi préférentiellement conçu pour être rapporté dans la cuve avec une faculté de mobilité entre au moins :
- d'une part sa position de fermeture dans laquelle il forme avec la cuve une enceinte de cuisson capable de monter en pression (et donc suffisamment étanche pour permettre une montée en pression en son sein),
- et d'autre part sa position d'ouverture autorisant la communication de l'intérieur de l'enceinte avec l'extérieur, de façon à ce que la pression régnant dans l'enceinte s'équilibre avec la pression atmosphérique.

En d'autres termes, le couvercle 2 peut être rapporté dans la cuve, c'est à dire être inséré à l'intérieur de cette dernière, selon un positionnement prédéterminé, positionnement dans lequel il conserve une possibilité de se déplacer de façon contrôlée entre ses positions de fermeture et d'ouverture. Dans les modes de réalisation illustrés aux figures, le couvercle 2, lorsqu'il occupe sa position de fermeture, vient en contact sensiblement étanche, par la périphérie de sa face supérieure, contre la face interne du rebord rentrant, au contact du joint d'étanchéité. Au contraire, lorsque le couvercle 2 se trouve en position d'ouverture, il se trouve à distance du rebord rentrant, ménageant ainsi un espace libre de mise en communication de l'intérieur de la cuve avec l'extérieur qui empêche toute montée en pression significative de l'enceinte. Le passage de la position d'ouverture à la position de fermeture (et vice versa) s'effectue préférentiellement par un mouvement de translation verticale du couvercle 2 de bas en haut (respectivement de haut en bas).

Afin de rapporter le couvercle 2 dans la cuve, l'autocuiseur comprend avantageusement un sous-ensemble relié mécaniquement au couvercle 2, ledit sous-ensemble étant destiné à venir reposer en appui contre et sur la cuve et formant ainsi un module d'accostage.

Le couvercle 2 est avantageusement monté mobile relativement au sous-ensemble entre deux positions extrêmes qui, lorsque le sous-ensemble repose de façon fixe et immobile contre le bord de cuve, correspondent respectivement aux positions d'ouverture et de fermeture du couvercle 2. Au sens de l'invention, on considère donc que le couvercle 2 est rapporté dans la cuve lorsqu'une pièce d'accostage (qui fait avantageusement partie du module d'accostage) reliée au couvercle 2 vient s'immobiliser en appui contre la cuve, le couvercle 2 se trouvant alors prépositionné au sein de la cuve, suspendu à la pièce d'accostage sous le rebord rentrant, avec une possibilité de se déplacer relativement à ladite pièce d'accostage et à la cuve. L'appareil de cuisson sous pression comprend avantageusement un élément transversal 3, qui forme ladite pièce d'accostage et qui est destinée à ce titre à être rapportée sur, et à reposer librement contre, la cuve. Le couvercle 2, le module d'accostage (incluant donc l'élément transversal 3) et les moyens de liaison mécanique entre eux forment un ensemble de couvercle unitaire et indépendant illustré aux figures. Avantageusement, l'élément transversal 3 est destiné à venir en appui périphérique contre et sur le rebord rentrant de la cuve, du côté de la face externe de ce dernier, de façon à être disposé en travers de l'ouverture de la cuve, pour venir en appui externe en deux régions diamétralement opposées du rebord rentrant. Le couvercle 2 est rapporté dans la cuve lorsque l'élément transversal 3 (ou tout autre moyen équivalent de l'ensemble de couvercle) repose sur et au-dessus de la cuve, en prenant appui sur le bord supérieur (formé ici par le rebord rentrant) de la cuve, le couvercle 2 étant avantageusement suspendu sous l'élément transversal 3.

L'appareil correspondant aux modes de réalisation illustrés aux figures est avantageusement un autocuiseur à couvercle flexible, c'est-à-dire un autocuiseur à couvercle rentrant pourvu d'un couvercle 2 déformable, dont la forme peut être modifiée par application d'une sollicitation mécanique commandée par l'utilisateur. L'invention n'est toutefois pas limitée à un type particulier d'autocuiseur à couvercle rentrant, et son enseignement s'applique également pleinement à d'autres types d'autocuiseurs à couvercle rentrant, et notamment aux autocuiseurs à trou d'homme.

Conformément aux modes de réalisation illustrés aux figures, le couvercle 2 est donc avantageusement un couvercle déformable susceptible d'évoluer entre une configuration géométrique de repos permettant l'introduction du couvercle 2 dans la cuve sous la face interne du rebord rentrant et une configuration géométrique déformée permettant au couvercle de venir en contact sensiblement étanche contre la face interne du rebord rentrant, cette dernière étant préférentiellement habillée par le joint d'étanchéité. Afin de permettre à l'utilisateur d'ouvrir et fermer à volonté l'enceinte de cuisson, le couvercle 2 est préférentiellement un couvercle déformable de façon réversible. Cela signifie que le couvercle 2 est réalisé dans un matériau élastique et est sollicité en déformation à l'intérieur du domaine élastique dudit matériau. De façon préférentielle, le couvercle 2 est un couvercle flexible, c'est-à-dire qu'il est conçu pour changer de forme sous l'effet d'une sollicitation mécanique en flexion. Par exemple, le couvercle 2 est constitué d'un flan métallique discoïde qui a subi un roulage de telle sorte qu'il affecte au repos, en l'absence de sollicitation mécanique extérieure de déformation, une forme de selle, c'est à dire une forme courbe sensiblement en U. En d'autres termes, le couvercle 2 présente avantageusement au repos (en l'absence de sollicitation de déformation) une forme de disque cintré, qui correspond en projection sur un plan horizontal à une ellipse. Grâce à cette forme gauche, ledit couvercle 2 peut être inséré à l'intérieur de la cuve à travers l'orifice délimité par le rebord rentrant, alors que le diamètre du flan discoïde (avant cintrage) à partir duquel est constitué le couvercle 2 est supérieur à celui de l'ouverture de cuve délimitée par le rebord rentrant.

Avantageusement, le levier 1 est conçu pour exercer un effort sensiblement vertical sur le couvercle 2, de préférence appliqué au centre du couvercle 2, pour faire passer ce dernier :
- de sa position d'ouverture à sa position de fermeture par traction verticale du bas vers le haut,
- et inversement, de sa position de fermeture à sa position d'ouverture par relâchement de l'effort de traction exercé, le couvercle 2 retournant en position de fermeture sous l'effet de son propre poids et/ou de l'action de rappel d'un ressort.

Dans le cas, illustré aux figures, d'un autocuiseur à couvercle flexible, le levier 1 exerce une double fonction, savoir une fonction de commande du déplacement du couvercle 2 et une fonction de commande de la déformation (en flexion) du couvercle 2, ces fonctions intervenant successivement. En effet, sous l'effet de l'effort de traction verticale exercé par le levier 1 au niveau du centre du couvercle 2, le couvercle 2 va tout d'abord se déplacer globalement selon un trajet vertical jusqu'à venir en butée, vers sa périphérie, contre et sous le rebord rentrant de la cuve. L'effort de traction du bas vers le haut exercé par le levier 1 est alors poursuivi tandis que le couvercle 2 est en appui contre le rebord rentrant (de préférence par l'intermédiaire d'un joint d'étanchéité interposé entre la face supérieure du couvercle et la face inférieure du rebord rentrant), ce qui occasionne alors une déformation élastique en flexion du couvercle 2. Cette déformation conduit le couvercle 2 à adopter une forme de disque sensiblement plat (et non plus cintré), forme lui permettant d'épouser de façon sensiblement uniforme et continue, sur sensiblement toute sa périphérie, le rebord rentrant. On obtient ainsi une enceinte de cuisson suffisamment étanche pour permettre la cuisson des aliments à une pression significativement supérieure à la pression atmosphérique.

En d'autres termes, dans les modes de réalisation illustrés aux figures, le levier 1 commande non seulement le déplacement proprement dit du couvercle 2 mais également le passage dudit couvercle 2 de sa configuration géométrique de repos à sa configuration géométrique déformée et vice versa.

Le levier 1 est muni d'une came 8 configurée de manière à coopérer avec le verrou 6. Plus particulièrement, la partie de la came 8 se trouvant à proximité du verrou 6 présente un profil complémentaire à la forme du verrou 6. En effet, la came est pourvue d'une dent 9 qui entre en prise et libère un logement 6a du verrou 6 pendant l'opération de fermeture et d'ouverture, respectivement.

Lorsque le système est fermé, c'est-à-dire lorsque le couvercle 2 est en position de fermeture et que le levier 1 est à la première position, le ressort 7 relié au verrou 6 est déployé et le verrou 6 entre en prise avec la came 8, et plus particulièrement le logement 6a du verrou 6 entre en prise avec la dent 9 de la came 8. Pour faire passer le système de la position de fermeture à la position d'ouverture, l'opération suivante doit être réalisée : le levier 1 doit être tourné de manière à éloigner le levier 1 de l'élément transversal 3. En se référant aux figures 1, 2 et 3, afin d'atteindre la position d'ouverture, le levier 1 doit être tourné dans le sens contraire des aiguilles d'une montre. Alors que le levier est tourné de cette façon, le verrou 6 est poussé par la dent 9 de la came 8, de sorte que le ressort 7 est comprimé et le verrou 6 s'éloigne de la came 8. Si le levier 1 est tourné davantage, le verrou 6 est libéré et le couvercle 2 est ouvert.

Le moyen de sécurité à l'ouverture 5 se présente par exemple sous la forme d'un doigt de sécurité sensible au niveau de pression interne de l'appareil et coulissant verticalement entre une position basse de rappel et une position haute, qu'il occupe alternativement selon le niveau de pression interne. Le moyen de sécurité à l'ouverture 5 est avantageusement conçu pour, en position activée (position haute du doigt, dans laquelle ce dernier est repoussé par la pression interne), bloquer le verrou 6 dans la position engagée (position dans laquelle le verrou 6 bloque lui-même le levier 1 dans sa première position).

Le verrou 6 comprend à cet effet avantageusement un logement 6c pour recevoir le moyen de sécurité à l'ouverture 5 dans la position activée pour bloquer le verrou 6 dans la position engagée.

Pour faire passer le système de la position d'ouverture à la position de fermeture, l'action suivante doit être réalisée : le levier 1 doit tourner dans le sens opposé par rapport au sens de rotation de la position de fermeture à la position d'ouverture. En se référant aux figures 1, 2 et 3, afin d'atteindre la position de fermeture, le levier 1 doit être tourné dans le sens des aiguilles d'une montre. Au cours de cette rotation, lorsque la dent 9 de la came 8 entre en prise avec le verrou 6, ledit verrou 6 est poussé par la came 8, de sorte que le ressort 7 est davantage comprimé et le verrou 6 se remet dans sa position initiale d'engagement avec la dent 9 de la came 8. Ainsi, la dent 9 entre de nouveau en prise avec le logement 6a du verrou 6 et le ressort 7 est déployé. Lorsqu'une pression se développe dans l'autocuiseur, le moyen de sécurité à l'ouverture 5 se trouve dans une position activée dans le logement 6c du verrou 6. Ainsi, le verrou 6 est immobilisé et le levier 1 ne peut plus tourner de la première position à la seconde position.

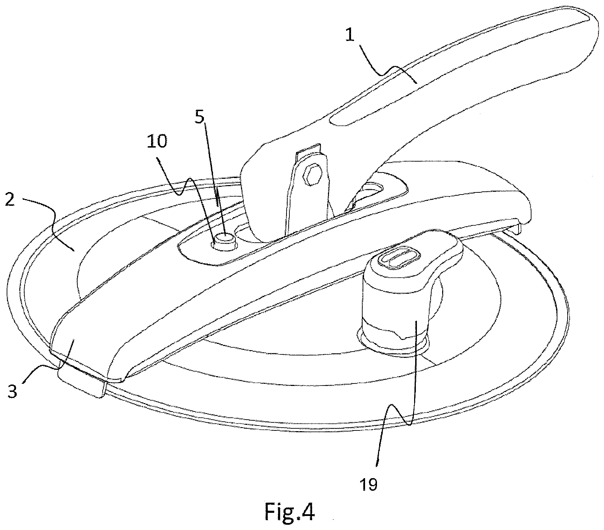

En se référant à la figure 4, un premier mode de réalisation de la présente invention est décrit, dans lequel l'élément transversal 3 comprend un logement 10 pour le moyen de sécurité à l'ouverture 5.

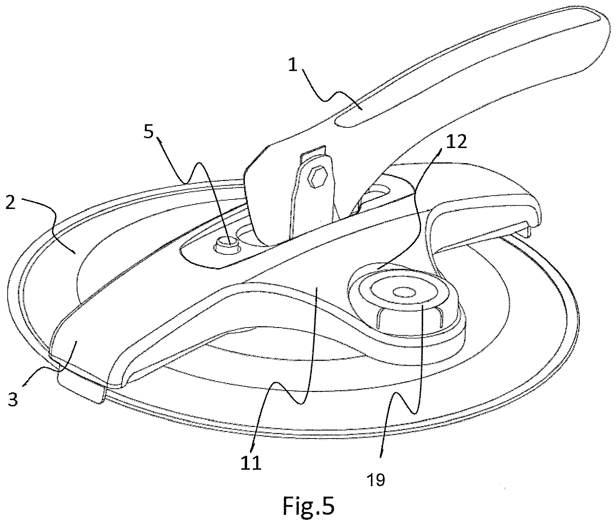

En se référant à la figure 5, un deuxième mode de réalisation de la présente invention est décrit, dans lequel l'élément transversal 3 comprend une partie de prolongement 11 positionnée, de préférence, perpendiculairement à l'élément transversal 3. La partie de prolongement 11 comporte un logement 12 pour la soupape de régulation de la pression 19. La soupape de régulation de la pression 19 peut être une soupape à poids ou une soupape à ressort.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention telle que définie par les revendications.

Dans une variante de réalisation non représentée, la came est pourvue d'un logement et le verrou est pourvu d'une dent configurée pour s'engager dans ledit logement.

### POSSIBILITE D'APPLICATION INDUSTRIELLE

L'invention trouve son application industrielle dans la conception, la fabrication et l'utilisation d'appareils de cuisson d'aliments sous pression.

## Revendications

1. Système d'ouverture et de fermeture pour autocuiseur à couvercle rentrant comprenant :
- un couvercle (2), mobile entre au moins une position de fermeture dans laquelle ledit couvercle (2) est apte à coopérer avec une cuve pour former un autocuiseur étanche et une position d'ouverture dans laquelle le couvercle (2) permet que l'intérieur de la cuve communique avec l'extérieur ;
- un levier (1) de commande du déplacement du couvercle (2) entre ses positions de fermeture et d'ouverture, mobile,en rotation entre une première position correspondant à la position de fermeture du couvercle (2) et au moins une seconde position correspondant à la position d'ouverture dudit couvercle (2) ; le levier (1) étant muni d'une came (8),
- un verrou (6), mobile entre une position engagée dans laquelle le verrou tend à maintenir le levier (1) dans la première position et une position désengagée dans laquelle le levier (1) peut tourner librement ;
- un organe de rappel (7) ramenant le verrou dans la position engagée contre la came (8), le verrou générant ainsi une force de maintien de la came (8) pour maintenir le levier (1) dans la première position,
**caractérisé en ce que** la came (8) et le verrou (6) sont configurés de telle sorte que lorsqu'un couple supérieur à une valeur prédéterminée est appliqué sur le levier (1) pour le faire passer de la première position à la seconde position, la came (8) applique sur le verrou (6) une force supérieure à la force de maintien et le levier (1) tourne de la première position à la seconde position, la came (8) repoussant le verrou (6) contre l'action de l'organe de rappel (7), qui se déplace alors de la position engagée à la position désengagée.

2. Système selon la revendication 1, **caractérisé en ce que** l'organe de rappel comprend un ressort (7).

3. Système selon l'une quelconque des revendications précédentes, **caractérisé en ce que** le verrou (6) est pourvu d'un logement (6a) et dans lequel la came (8) est pourvue d'une dent (9) configurée de manière à s'engager dans le logement (6a) lorsque le levier (1) est dans la première position et le verrou (6) est dans la position engagée.

4. Système selon la revendication 3, **caractérisé en ce que** le logement comprend une paroi concave (6a).

5. Système selon l'une quelconque des revendications 3 ou 4, **caractérisé en ce que** la came (8) est munie d'une partie (8a) adjacente à la dent (9) et dans laquelle le verrou (6) est muni d'une paroi inclinée (6b) configurée de telle sorte que, lorsque le levier (1) pivote de la première position à la seconde position, cette partie (8a) pousse la paroi inclinée (6b).

6. Système selon l'une quelconque des revendications précédentes, **caractérisé en ce qu'**il comporte un moyen de sécurité à l'ouverture (5) mobile entre une position activée tant que la pression régnant dans l'autocuiseur est supérieure à une valeur prédéterminée et une position désactivée tant que la pression régnant dans l'enceinte est inférieure à une valeur prédéterminée.

7. Système selon la revendication 6, **caractérisé en ce que** le moyen de sécurité à l'ouverture (5) est conçu pour, en position activée, bloquer le verrou (6) dans la position engagée.

8. Système selon l'une quelconque des revendications 6 ou 7, **caractérisé en ce qu'**il comporte un élément transversal (3) comprenant un logement (10) de réception du moyen de sécurité à l'ouverture (5).

9. Système selon la revendication 8, **caractérisé en ce qu'**il comporte une soupape de sécurité à la surpression (4) agencée sur l'élément transversal.

10. Système selon l'une quelconque des revendications 8 ou 9, **caractérisé en ce que** ledit système comprend une soupape de régulation de la pression (19) agencée sur l'élément transversal.

11. Système selon la revendication 10, **caractérisé en ce que** l'élément transversal (3) comprend une partie de prolongement (11), la partie de prolongement (11) comprenant un logement (12) pour la soupape de régulation de la pression (19).

12. Système selon la revendication précédente, **caractérisé en ce que** la partie de prolongement (11) est positionnée perpendiculairement à l'élément transversal (3).

13. Système selon les revendications 10 à 12, **caractérisé en ce que** la soupape de régulation de la pression (19) est une soupape à poids ou une soupape à ressort.

14. Autocuiseur comprenant un système d'ouverture et de fermeture selon l'une quelconque des revendications précédentes.

## Patentansprüche

1. Öffnungs- und Verschlusssystem für einen Schnellkochtopf mit integriertem Deckel, aufweisend:
- einen Deckel (2), der zumindest zwischen einer geschlossenen Position, in der der Deckel (2) in der Lage ist, mit einem Topf einen dichten Schnellkochtopf zu bilden, und einer offenen Position, in der der Deckel (2) einen Zugang zu dem Inneren des Topfes von außen ermöglicht, beweglich ist;
- einen Hebel (1) zur Steuerung der Bewegung des Deckels (2) zwischen seiner geschlossenen und seiner geöffneten Position, der zwischen einer ersten Position, die der geschlossenen Position des Deckels (2) entspricht, und mindestens einer zweiten Position, die der geöffneten Position dieses Deckels (2) entspricht, drehbar ist; wobei der Hebel (1) mit einem Nocken (8) versehen ist,
- eine Klinke (6), die zwischen einer Eingriffsposition, in der der Riegel dazu bestimmt ist, den Hebel (1) in der ersten Position zu halten, und einer Ausrückstellung, in der sich der Hebel (1) frei drehen kann, beweglich ist;
- ein Rückstellelement (7), das den Riegel in die Eingriffsposition gegen den Nocken (8) zurückführt, wobei der Riegel dadurch eine Haltekraft auf den Nocken (8) ausübt, um den Hebel (1) in der ersten Stellung zu halten,
**dadurch gekennzeichnet, dass** der Nocken (8) und die Klinke (6) so konfiguriert sind, dass bei Anlegen eines, einen vorbestimmten Wert überschreitenden Drehmoments an den Hebel (1) um diesen von der ersten Stellung in die zweite Stellung zu bewegen, der Nocken (8) eine Kraft auf die Klinke (6) ausübt, die größer als die Haltekraft ist, und der Hebel (1) sich von der ersten Stellung in die zweite Stellung dreht, wobei der Nocken (8) die Klinke (6) gegen die Wirkung des Rückstellelements (7) drückt, das sich dann von der Eingriffsposition in die Ausrückstellung bewegt.

2. System nach Anspruch 1, **dadurch gekennzeichnet, dass** das Rückstellelement eine Feder (7) umfasst.

3. System nach einem der vorhergehenden Ansprüche, **dadurch gekennzeichnet, dass** der Riegel (6) einen Anlagebereich (6a) aufweist und wobei der Nocken (8) einen Zahn (9) aufweist, der derart konfiguriert ist, dass er in den Anlagebereich (6a) eingreift, wenn sich der Hebel (1) in der ersten Position und der Riegel (6) in der Eingriffsstellung befinden.

4. System nach Anspruch 3, **dadurch gekennzeichnet, dass** der Anlagebereich eine konkave Wandung (6a) aufweist.

5. System nach einem der Ansprüche 3 oder 4, **dadurch gekennzeichnet, dass** der Nocken (8) einen an den Zahn (9) angrenzenden Abschnitt (8a) aufweist und wobei die Klinke (6) mit einer abgeschrägten Wand (6b) versehen ist, die derart konfiguriert ist, dass bei Schwenken des Hebels (1) von der ersten Position in die zweite Position dieser Abschnitt (8a) gegen die abgeschrägte Wand (6b) drückt.

6. System nach einem der vorhergehenden Ansprüche, **dadurch gekennzeichnet, dass** es ein Öffnungssicherheitsmittel (5) umfasst, das zwischen einer aktivierten Position, in der der Druck im Schnellkochtopf höher als ein vorbestimmter Wert ist, und einer deaktivierten Position, in der der Druck im Inneren niedriger als ein vorbestimmter Wert ist, beweglich ist.

7. System nach Anspruch 6, **dadurch gekennzeichnet, dass** das Öffnungssicherungsmittel (5) so ausgelegt ist, dass es in der aktivierten Position die Klinke (6) in der eingerasteten Position verriegelt.

8. System nach einem der Ansprüche 6 oder 7, **dadurch gekennzeichnet, dass** es ein Querelement (3) mit einem Gehäuse (10) zur Aufnahme des Öffnungssicherungsmittels (5) aufweist.

9. System nach Anspruch 8, **dadurch gekennzeichnet, dass** es ein Überdruck-Sicherheitsventil (4) aufweist, das an dem Querelement angeordnet ist.

10. System nach einem der Ansprüche 8 oder 9, **dadurch gekennzeichnet, dass** das System ein Druckregelventil (19) umfasst, das an einem Querelement (11) angeordnet ist.

11. System nach Anspruch 10, **dadurch gekennzeichnet, dass** das Querelement (3) einen Verlängerungsabschnitt (11) umfasst, wobei der Verlängerungsabschnitt (11) ein Gehäuse (12) für das Druckregelventil (19) aufweist.

12. System nach dem vorhergehenden Anspruch, **dadurch gekennzeichnet, dass** der Verlängerungsabschnitt (11) senkrecht zum Querelement (3) angeordnet ist.

13. System nach einem der Ansprüche 10 bis 12, **dadurch gekennzeichnet, dass** das Druckregelventil (19) ein gewichtsbeschwertes Ventil oder ein Federventil ist.

14. Schnellkochtopf mit einem Öffnungs- und Schließsystem nach einem der vorhergehenden Ansprüche.

## Claims

1. An opening and closing system for a pressure cooker having an internally-fitted lid, the system comprising:
- a lid (2) that is movable between at least a closed position in which said lid (2) is suitable for co-operating with a vessel to form a sealed pressure cooker, and an opening position in which the lid (2) allows the inside of the vessel to communicate with the outside;
- a control lever (1) for controlling movement of the lid (2) between its closed and opening positions, the lever being movable in turning between a first position corresponding to the closed position of the lid (2), and at least one second position corresponding to the opening position of said lid (2); the lever (1) being provided with a cam (8);
- a latch (6) that is movable between an engaged position in which the latch tends to hold the lever (1) in the first position, and a disengaged position in which the lever (1) can turn freely; and
- a return member (7) returning the latch towards the engaged position against the cam (8), the latch thus generating a holding force for holding the cam (8) in order to hold the lever (1) in the first position;
the system being **characterized in that** the cam (8) and the latch (6) are configured in such a manner that when a torque greater than a predetermined value is applied to the lever (1) to cause it to pass from the first position to the second position, the cam (8) applies a force on the latch (6) that is greater than the holding force and the lever (1) turns from the first position to the second position, the cam (8) pushing the latch (6) against the action of the return spring (7), which then moves from the engaged position to the disengaged position.

2. A system according to claim 1, **characterized in that** the return member comprises a spring (7).

3. A system according to any one of the preceding claims, **characterized in that** the latch (6) is provided with a housing (6a), and wherein the cam (8) is provided with a tooth (9) configured to engage in the housing (6a) when the lever (1) is in the first position and the latch (6) is in the engaged position.

4. A system according to claim 3, **characterized in that** the housing has a concave wall (6a).

5. A system according to claim 3 or claim 4, **characterized in that** the cam (8) is provided with a portion (8a) adjacent to the tooth (9), and wherein the latch (6) is provided with a sloping wall (6b) configured in such a manner that when the lever (1) pivots from the first position to the second position, this portion (8a) pushes the sloping wall (6b).

6. A system according to any one of the preceding claims, **characterized in that** it includes opening safety means (5) that are movable between an activated position while the pressure inside the pressure cooker is greater than a predetermined value, and a deactivated position while the pressure inside the enclosure is less than a predetermined value.

7. A system according to claim 6, **characterized in that** the opening safety means (5) are designed, when in the activated position, to block the latch (6) in the engaged position.

8. A system according to claim 6 or claim 7, **characterized in that** it includes a transverse element (3) including a housing (10) for receiving the opening safety means (5).

9. A system according to claim 8, **characterized in that** it includes an overpressure safety valve (4) arranged on the transverse element.

10. A system according to claim 8 or claim 9, **characterized in that** the system includes a pressure regulator valve (19) arranged on the transverse element.

11. A system according to claim 10, **characterized in that** the transverse element (3) includes an extension portion (11), the extension portion (11) having a housing (12) for the pressure regulator valve (19).

12. A system according to the preceding claim, **characterized in that** the extension portion (11) is positioned perpendicularly to the transverse element (3).

13. A system according to any one of claims 10 to 12, **characterized in that** the pressure regulator valve (19) is a weight-loaded valve or a springloaded valve.

14. A pressure cooker including an opening and closing system according to any one of the preceding claims.
